# FASCICULE DE BREVET EUROPEEN

(11) **EP 2 316 199 B1**
(45) Date de publication et mention de la délivrance du brevet: **20.02.2019**
(21) Numéro de dépôt: 09769545.6
(22) Date de dépôt: 26.06.2009
(51) Int. Cl.: H04L 12/70

(54) **MÉCANISME DE PROTECTION D'UN CIRCUIT VIRTUEL**
VERFAHREN ZUM SCHUTZ EINER VIRTUELLEN VERBINDUNG
METHOD FOR PROTECTING A VIRTUAL CIRCUIT

(30) Priorité: 27.06.2008 FR 0854338
(43) Date de publication de la demande: 04.05.2011
(73) Titulaire: Transpacific IP Group Limited, Grand Cayman KY1-1001 (KY)
(72) Inventeur: NIGER, Philippe, F-22300 Lannion (FR); JOUNAY, Frédéric, F-22560 Pleumeur Bodou (FR)
(74) Mandataire: Eidelsberg, Olivier Nathan
(86) Numéro de dépôt international: PCT/FR2009/051238
(87) Numéro de publication internationale: WO 2009/156704

(56) Documents cités:
- PAN (HAMMERHEAD SYSTEMS) M BOCCI MUSTAPHA AISSAOUI (ALCATEL) FLORIN BALUS HAMID OULD-BRAHIM (NORTEL) P: "Pseudo Wire Protection; draft-pan-pwe3-protection-03.txt" IETF STANDARD-WORKING-DRAFT, INTERNET ENGINEERING TASK FORCE, IETF, CH, no. 3, 1 juillet 2006 (2006-07-01), XP015047198 ISSN: 0000-0004
- LUCA MARTINI CHRIS METZ CISCO SYSTEMS INC THOMAS D NADEAU MATTHEW BOCCI BT ALCATEL-LUCENT BELLSOUTH FLORIN BALUS MUSTAPHA AISSAOUI: "Segmented Pseudo Wire; draft-ietf-pwe3-segmented-pw-06.txt" IETF STANDARD-WORKING-DRAFT, INTERNET ENGINEERING TASK FORCE, IETF, CH, vol. pwe3, no. 6, 1 novembre 2007 (2007-11-01), XP015053784 ISSN: 0000-0004

## Description

L'invention se situe dans le domaine des télécommunications, et plus particulièrement, mais non exclusivement, le domaine des réseaux de commutation de paquets.

Dans un réseau de commutation de paquets ou *Paquet Switched Network* en anglais, les données à transmettre se présentent sous forme de paquets traités par des équipements du réseau jusqu'à atteindre leur destination. L'ensemble des paquets à transmettre constitue un flux de données.

Un exemple de technologie utilisée dans les réseaux de commutation de paquets pour acheminer des paquets de données est la technologie MPLS (*MultiProtocol Label Switching* ou en français : commutation multi-protocole par étiquette). La technologie MPLS propose de rajouter, en entête des paquets de données, une ou plusieurs étiquettes contenant des informations permettant à un équipement du réseau de déterminer le prochain équipement par lequel un paquet doit transiter pour atteindre sa destination. La technologie MPLS est décrite plus en détail dans un document de l'IETF (groupe de standardisation de l'Internet, abréviation des termes anglais *Internet Engineering Task Force*), référencé RFC 3031 (RFC signifiant « requête pour commentaires », ou en anglais *Request For Comments).*

Cependant, le protocole MPLS ne permet de traiter que des paquets conformes au protocole IP (*Internet Protocol*, ou protocole internet).

Afin de pallier cet inconvénient, le groupe de standardisation PWE3 (*PseudoWire Emulation Edge to Edge*) de l'IETF définit un concept de circuit virtuel permettant d'émuler un lien point à point entre deux équipements d'un réseau de commutation de paquets reposant sur la technologie IP/MPLS. De tels circuits virtuels, définis dans le document RFC 3985 sous le terme de « *pseudo-wire* » et appelé communément en français « pseudo-liens », permettent la transmission de paquets de données non-conformes au protocole IP, tels que par exemple des paquets de données conformes au protocole ATM.

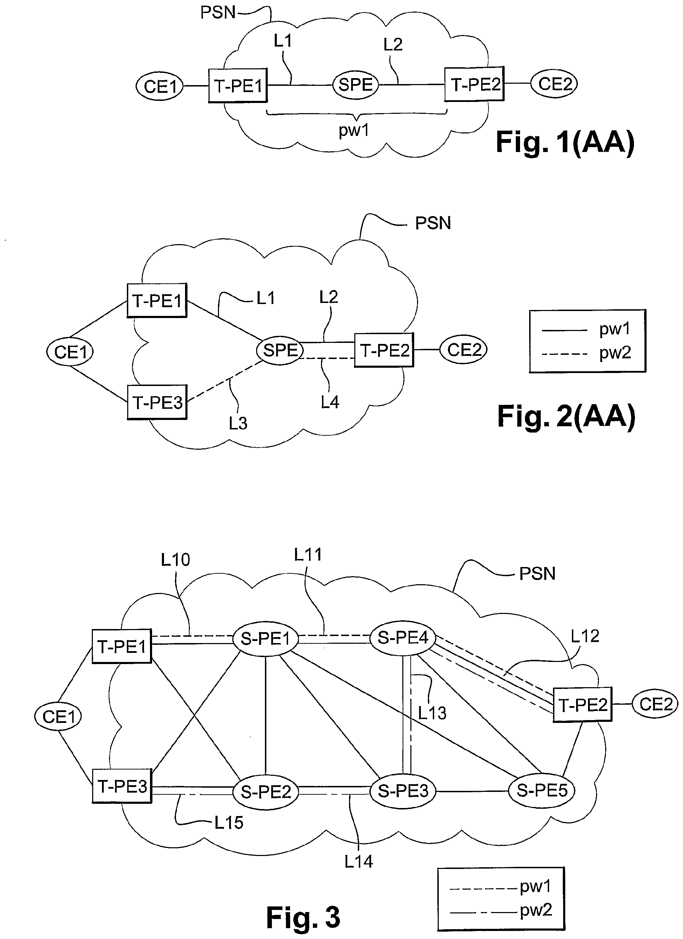

En référence à la figure 1, un circuit virtuel pw1 est établi entre un premier équipement terminal T-PE1 disposé en bordure d'un réseau de commutation de paquets PSN et un deuxième équipement terminal T-PE2 également disposé en bordure du réseau PSN. Une première liaison L1 constitutive du circuit virtuel pw1 est établie entre le premier équipement terminal et un équipement commutateur S-PE du réseau PSN. Une deuxième liaison L2, elle aussi constitutive du circuit virtuel pw1, est, quant à elle, établie entre l'équipement commutateur S-PE et le deuxième équipement terminal T-PE2. Le premier équipement terminal T-PE1 est appelé équipement terminal d'entrée et constitue une première extrémité du circuit virtuel pw1 et le deuxième équipement terminal T-PE2, est appelé équipement terminal de sortie et constitue une deuxième extrémité du circuit virtuel pw1. Une fois le circuit virtuel pw1 établi, l'équipement terminal d'entrée T-PE1 émet un flux de données acheminé via le circuit virtuel pw1 jusqu'à l'équipement terminal de sortie T-PE2. Un tel circuit virtuel pw1 est défini plus en détail dans le document « *An Architecture for Multi-Segment Pseudo-Wire Emulation Edge-to-Edge. draft-ietf-pwe3-ms-pw-arch-03.txt* ». Un tel circuit virtuel permet une transmission bidirectionnelle du flux de données. Ainsi, dans un premier sens de transmission, le premier équipement terminal est un équipement terminal d'entrée, et dans un deuxième sens de transmission, le premier équipement terminal est vu comme un équipement terminal de sortie.

Afin d'assurer la continuité du service en cas de défaillance de l'équipement terminal d'entrée, le groupe de travail PWE3 propose une solution consistant à doubler le premier circuit virtuel, établi entre l'équipement terminal d'entrée et l'équipement terminal de sortie, par un deuxième circuit virtuel servant de circuit virtuel de secours de sorte que, lorsque l'équipement terminal d'entrée constituant une extrémité du premier circuit virtuel tombe en panne les paquets de données sont acheminés au moyen du circuit virtuel de secours dont une extrémité est constituée par un équipement terminal d'entrée différent.

Ainsi, en référence à la figure 2, un premier circuit virtuel pw1 est établi entre un premier équipement terminal d'entrée T-PE1 disposé en bordure d'un réseau de commutation de paquets PSN et un équipement terminal de sortie T-PE2 également disposé en bordure du réseau PSN. Une première liaison L1 constitutive du circuit virtuel pw1 est établie entre l'équipement terminal d'entrée T-PE1 et un équipement commutateur S-PE du réseau PSN. Une deuxième liaison L2, elle aussi constitutive du circuit virtuel pw1, est établie entre l'équipement commutateur S-PE et l'équipement terminal de sortie T-PE2. Un deuxième circuit virtuel pw2 est ensuite établi entre un deuxième équipement terminal d'entrée T-PE3, constituant une première extrémité du circuit virtuel, et l'équipement terminal de sortie T-PE2 constituant une deuxième extrémité du circuit virtuel. Une première liaison L3 constitutive du deuxième circuit virtuel est établie entre le deuxième équipement terminal d'entrée T-PE3 et l'équipement commutateur S-PE et une seconde liaison L4, également constitutive du deuxième circuit virtuel, est établie entre l'équipement commutateur S-PE et l'équipement terminal de sortie T-PE2.

Afin d'assurer la continuité du service, l'équipement terminal de sortie T-PE2 comporte des moyens de détection d'une défaillance des liaisons L1 ou L2 ou d'une panne du premier équipement terminal d'entrée T-PE1 et des moyens de basculement du flux des données du premier circuit virtuel pw1 vers le deuxième circuit virtuel pw2.

Lorsqu'une défaillance intervient au niveau du premier équipement terminal d'entrée T-PE1, celle-ci est détectée au niveau de l'équipement terminal de sortie T-PE2, par exemple à partir d'un message indiquant l'apparition d'une défaillance émis à travers le réseau PSN à destination de l'équipement terminal de sortie T-PE2. Une fois informé de la défaillance, l'équipement terminal de sortie T-PE2 demande le basculement du flux de données du premier circuit virtuel pw1 vers le deuxième circuit virtuel pw2. Les données sont alors acheminées depuis le deuxième équipement terminal d'entrée T-PE3 vers l'équipement terminal de sortie T-PE2. Ceci a pour conséquence un allongement du temps de restauration en cas de défaillance d'un équipement d'entrée impactant de manière négative la qualité de service.

De plus, une telle solution présente l'inconvénient d'être consommatrice en ressources du réseau telles que par exemple des ressources de traitement au niveau des équipements (capacité de mémoire de stockage, capacité de calcul, etc.), les flux de signalisation en vue de l'établissement des deux circuits virtuels, la bande passante, notamment entre l'équipement commutateur et l'équipement terminal de sortie.

Le document "draft-pan-pwe3-protection 03.txt", publié le 1er juillet 2006 par l'IETF (Internet Engineering Task Force), enseigne un procédé d'établissement d'un ou plusieurs circuits virtuels de secours. Il décrit un procédé d'établissement d'un circuit virtuel selon lequel des informations sont ajoutées à la demande d'établissement du circuit virtuel, afin, d'une part, de l'identifier comme circuit virtuel de secours protégeant un circuit virtuel précis, et afin, d'autre part, d'établir un ordre de priorité entre différents circuits virtuels de secours dans le cas où plusieurs circuits virtuels de secours protègent un même circuit virtuel. Une demande d'établissement spécifique doit tout de même être émise pour chaque circuit virtuel.

La solution proposée dans le cadre de l'invention ne présente pas ces inconvénients de l'art antérieur.

En effet, elle repose sur un procédé d'établissement d'un premier circuit virtuel entre un premier équipement terminal d'entrée et un équipement terminal de sortie, conforme à la revendication 1..

Une telle solution permet d'optimiser l'utilisation des ressources du réseau, notamment en terme d'OPEX car, en établissant au moyen d'un unique message de demande d'établissement deux circuits virtuels, seul le premier équipement terminal d'entrée est configuré pour établir le premier circuit virtuel et le circuit virtuel de secours. Ceci se traduit par l'émission d'un unique message de demande d'établissement deux circuits virtuels, La solution objet de l'invention permet avantageusement d'établir une liaison unique commune aux deux circuits virtuels entre l'équipement commutateur et l'équipement terminal de sortie ce qui permet d'optimiser l'utilisation la bande passante, entre l'équipement commutateur et l'équipement terminal de sortie.

Une telle solution n'a jamais été envisagée dans l'art antérieur. En effet, dans l'art antérieur, lorsqu'un circuit virtuel principal et un circuit virtuel de secours sont établis entre un premier, respectivement un deuxième, équipement terminal d'entrée et un équipement terminal de sortie, chaque équipement terminal d'entrée est configuré afin d'émettre un message de demande d'établissement d'un circuit virtuel et une liaison est établie entre l'équipement terminal de sortie et l'équipement commutateur pour chaque circuit virtuel, soit deux liaisons. En outre, une telle approche est préconisée dans les normes, notamment dans le document « Pseudowire (PW) Redundancy », draft-ietf-pwe3-redundancy-00.txt, Mars 2008.

Allant à l'encontre de ces préjugés de l'homme du métier, les inventeurs de la présente demande proposent, au contraire, de mettre en commun le message de demande d'établissement des deux circuits virtuels et la liaison établie entre l'équipement commutateur et l'équipement terminal de sortie ce qui permet d'améliorer l'utilisation des ressources du réseau et ainsi de réduire le temps de restauration en cas de défaillance du premier équipement terminal d'entrée. En effet dans l'état de l'art, le circuit virtuel de secours, bien que n'étant utilisé pour diffuser les données que lorsque le circuit virtuel principal est défaillant, réserve, de par son établissement, des ressources sur l'ensemble du réseau entre l'équipement commutateur et l'équipement terminal de sortie. En rendant commune au circuit virtuel principal et au circuit virtuel de secours la liaison établie entre l'équipement commutateur et l'équipement terminal de sortie, les ressources du réseau précédemment réservées pour le circuit virtuel de secours sont libérées et peuvent être utilisées de manière plus optimale.

Les données diffusées dans les circuits virtuels peuvent être des données utiles, comme par exemple un flux ATM transportant un service ou encore des données de services, telle que par exemple un message de détection de défaillance d'un équipement ou d'une liaison du réseau. Ainsi dans le cas d'échanges de données de services, la solution proposée dans la présente demande permet d'améliorer la réactivité des équipements présents dans le réseau.

Selon une particularité du procédé d'établissement objet de l'invention, le premier message de demande d'établissement comporte en outre un identifiant de l'équipement commutateur auquel le premier message de demande d'établissement est destiné.

Dans un exemple de mise en oeuvre de l'invention, afin d'initier l'établissement des circuits virtuels principaux et de secours, on suppose que le premier équipement terminal d'entrée possède, dans une table de routage, les informations sur les sauts à effectuer pour atteindre le deuxième équipement terminal d'entrée et l'équipement terminal de sortie. Grâce à ces informations, le premier équipement terminal d'entrée sait à destination de quel équipement du réseau, qui est considéré alors comme l'équipement commutateur, il doit envoyer le message de demande d'établissement des circuits virtuels. Il n'est alors nécessaire de configurer que le premier équipement terminal d'entrée, ce qui allège les opérations de maintenance du réseau. Le paramètre indiquant que le deuxième circuit virtuel est un circuit virtuel de secours, permet de configurer l'équipement commutateur, en vue de la diffusion ultérieure des données.

Dans un tel procédé d'établissement, le premier message de demande d'établissement comprenant en outre une demande d'établissement du circuit virtuel de secours constitué du deuxième lien et d'un troisième lien à établir entre l'équipement commutateur et un deuxième équipement terminal d'entrée, le procédé comprend une étape d'émission d'un deuxième message de demande d'établissement du troisième lien à destination du deuxième équipement terminal d'entrée.

Dans un tel deuxième message de demande d'établissement, le champ identifiant de l'équipement d'entrée comporte l'identifiant de l'équipement terminal de sortie et le champ identifiant de l'équipement terminal de sortie comporte l'identifiant du deuxième équipement terminal d'entrée. Ainsi, tout se passe comme si l'établissement du troisième lien était à l'initiative de l'équipement terminal de sortie, qui est vu comme un équipement terminal d'entrée, le deuxième équipement terminal d'entrée étant vu comme un équipement terminal de sortie.

Selon une particularité du procédé d'établissement objet de l'invention, un flux de données étant diffusé au travers du premier circuit virtuel, le procédé comporte sur obtention par l'équipement commutateur d'une information de défaillance relative au premier lien, une étape de basculement du flux de données sur le troisième lien.

Une telle réalisation permet d'améliorer le temps de restauration en cas de défaillance relative au premier lien puisque le basculement du flux de données intervient au plus près de la défaillance, à savoir au niveau de l'équipement commutateur et non plus au niveau de l'équipement terminal de sortie. En déplaçant l'étape de basculement de l'équipement terminal de sortie vers l'équipement commutateur, l'équipement terminal de sortie ne supporte plus les mécanismes de basculement. Ceci permet de rendre l'équipement terminal de sortie transparent aux mécanismes de protection.

L'invention concerne également un équipement commutateur selon la revendication 2 destiné à être
connecté par un premier lien à un premier équipement terminal d'entrée et par un deuxième lien à un équipement terminal de sortie, lesdits premier et deuxième liens étant constitutifs d'un premier circuit virtuel à établir, l'équipement commutateur comprenant des moyens de réception d'un premier message de demande d'établissement du premier circuit virtuel.

Dans un tel équipement commutateur, le premier message de demande d'établissement comprenant en outre une demande d'établissement d'un circuit virtuel de secours constitué du deuxième lien et d'un troisième lien à établir entre l'équipement commutateur et un deuxième équipement terminal d'entrée, l'équipement commutateur comprend des moyens d'émission d'un deuxième message de demande d'établissement du troisième lien à destination du deuxième équipement terminal d'entrée.

Un tel équipement commutateur est apte à établir sur réception d'un premier message de demande d'établissement émis par le premier équipement terminal d'entrée deux circuits virtuels ayant une liaison commune entre l'équipement commutateur et l'équipement terminal de sortie puis une liaison propre entre l'équipement commutateur et un premier, respectivement un deuxième, équipement terminal d'entrée. Ceci permet une optimisation des ressources du réseau entre l'équipement commutateur et l'équipement terminal de sortie ce qui a pour conséquence l'amélioration du temps de restauration lors de la détection d'une défaillance intervenant au niveau du premier équipement terminal d'entrée ou sur la première liaison.

Selon une particularité de l'équipement commutateur objet de l'invention, celui-ci comporte des moyens de basculement d'un flux de données du premier lien vers le troisième lien en cas de défaillance relative au premier lien.

En embarquant une fonction de basculement du flux de données dans l'équipement commutateur, on améliore le temps de restauration lors de la détection d'une défaillance intervenant au niveau du premier équipement terminal d'entrée.

Ceci a pour conséquence une amélioration de la réactivité réseau car le basculement intervient au plus près de la défaillance. Ainsi, la défaillance du premier équipement terminal d'entrée est traitée plus rapidement, l'information n'ayant pas à traverser le réseau jusqu'à l'équipement terminal de sortie avant d'être traitée. Ainsi, le basculement du flux de données vers la troisième liaison, établie entre l'équipement commutateur et le deuxième équipement terminal d'entrée et, constitutive avec la deuxième liaison du circuit virtuel de secours, intervient plus rapidement.

Une telle solution permet de diminuer la quantité de données perdues consécutivement à la défaillance du premier équipement terminal d'entrée.

L'invention concerne aussi un programme d'ordinateur selon la revendication 3 comprenant des instructions de code de programme pour la mise en oeuvre des étapes du procédé objet de l'invention lorsque le programme est exécuté par un processeur.

D'autres caractéristiques et avantages apparaîtront à la lecture de modes de réalisation décrits en référence aux dessins dans lesquels :
- la figure 1 représente un circuit virtuel établi conformément à l'état de l'art, entre un équipement terminal d'entrée et un équipement terminal de sortie appartenant à un réseau de commutation de paquets,
- la figure 2 représente la solution mise en oeuvre dans l'état de l'art afin d'assurer la continuité du service dans un réseau de commutation de paquets,
- la figure 3 illustre deux pseudo-liens établis conformément au procédé d'établissement objet de l'invention,
- la figure 4 propose un diagramme temporel d'échanges de messages entre un premier équipement terminal d'entrée et des équipements commutateurs appartenant à un réseau de commutation de paquets d'une part et les équipements commutateurs et un équipement terminal de sortie et un deuxième équipement terminal d'entrée d'autre part, afin d'établir des circuits virtuels, conformément au procédé d'établissement objet de l'invention,
- les figures 5A, 5B, 5C représentent des messages d'établissement utilisés dans le procédé d'établissement objet de l'invention,
- la figure 6 propose un diagramme temporel d'échanges de messages entre un premier équipement terminal d'entrée et des équipements commutateurs appartenant à un réseau de commutation de paquets d'une part et les équipements commutateurs et un équipement terminal de sortie et un deuxième équipement terminal d'entrée d'autre part lors de la diffusion de données dans les circuits virtuels établis dans le réseau de commutation de paquets, selon le procédé d'établissement objet de l'invention, dans un premier mode de réalisation de l'invention,
- la figure 7 propose un diagramme temporel d'échanges de messages entre un premier équipement terminal d'entrée et des équipements commutateurs appartenant à un réseau de commutation de paquets d'une part et les équipements commutateurs et un équipement terminal de sortie et un deuxième équipement terminal d'entrée d'autre part lors de la diffusion de données dans les circuits virtuels établis dans le réseau de commutation de paquets, selon le procédé d'établissement objet de l'invention, dans un deuxième mode de réalisation de l'invention,
- la figure 8 représente un équipement terminal d'entrée apte à mettre en oeuvre le procédé d'établissement objet de l'invention.
- la figure 9 représente un équipement commutateur apte à mettre en oeuvre le procédé d'établissement objet de l'invention.

La figure 3 représente un réseau de commutation de paquets PSN comprenant une pluralité d'équipements terminaux T-PE1, T-PE2 et T-PE3 et une pluralité d'équipements commutateurs S-PE1 à S-PE5. Dans un tel réseau, une connexion est établie entre un premier équipement terminal d'entrée T-PE1, un équipement terminal de sortie T-PE2 et un deuxième équipement terminal d'entrée T-PE3, chacun de ces trois équipements terminaux étant disposé en bordure du réseau de commutation de paquets PSN.

En référence à cette figure, une première liaison L10 est établie entre le premier équipement terminal d'entrée T-PE1 et un premier équipement commutateur S-PE1 appartenant au réseau PSN. Une deuxième liaison L11 est établie entre le premier équipement commutateur S-PE1 et un deuxième équipement commutateur S-PE4. Une troisième liaison L12 est établie entre le deuxième équipement commutateur S-PE4 et l'équipement terminal de sortie T-PE2. La première liaison L10, la deuxième liaison L11 et la troisième liaison L12 constituent un premier circuit virtuel pw1, dit circuit virtuel principal, établissant une connexion entre le premier équipement terminal d'entrée T-PE1 et l'équipement terminal de sortie T-PE2. Le circuit virtuel pw1 ainsi établi permet de diffuser, de manière bidirectionnelle, des flux de données découpés en paquets entre l'équipement d'entrée T-PE1 et l'équipement de sortie T-PE2.

Un deuxième circuit virtuel pw2, dit circuit virtuel de secours, est établi entre le deuxième équipement terminal d'entrée T-PE3 et l'équipement terminal de sortie T-PE2. Le circuit virtuel pw2 est constitué d'une première liaison L15 établie entre l'équipement terminal d'entrée T-PE3 et un équipement commutateur S-PE2, d'une deuxième liaison L14 établie entre l'équipement commutateur S-PE2 et un équipement commutateur S-PE3, d'une troisième liaison L13 établie entre l'équipement commutateur S-PE3 et un équipement commutateur S-PE4 et de la liaison L12.

Ainsi, la liaison L12 est commune aux deux circuits virtuels pw1 et pw2. Une telle solution permet d'optimiser les ressources du réseau, telles que la bande passante, entre l'équipement commutateur S-PE4 et l'équipement terminal de sortie T-PE2.

Un exemple d'application de l'invention est la collecte de trafic pour un réseau mobile. Dans un tel exemple, les équipements terminaux d'entrée T-PE1 et T-PE3 sont connectés à un premier équipement tel qu'une station de base CE1, l'équipement terminal T-PE1 assurant la transmission des données issues de la station de base CE1 vers d'autres équipements d'agrégation tels qu'un RNC (Radio Network Controller, ou contrôleur de réseau radio en français) CE2, connectés à l'équipement terminal de sortie T-PE2.

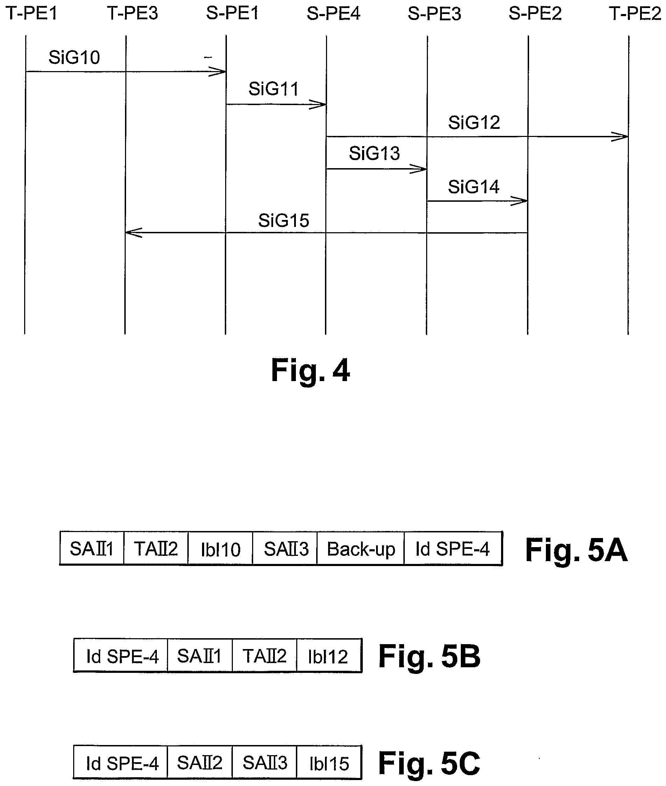

La figure 4 représente un diagramme temporel d'échange de messages entre le premier équipement terminal d'entrée T-PE1, les équipements commutateurs S-PE1, S-PE4, S-PE3 et S-PE2, l'équipement terminal de sortie T-PE2 et le deuxième équipement terminal d'entrée T-PE3 lors de l'établissement des circuits virtuels pw1 et pw2.

Conformément à l'invention, l'établissement des circuits virtuels pw1 et pw2 est à l'initiative du premier équipement terminal d'entrée T-PE1 et repose sur l'échange de messages d'établissement conformes au protocole LDP (Label Distribution Protocol, ou protocole de distribution d'étiquette en français) tel que défini dans les documents RFC3036 et RFC4477.

Un premier message de demande d'établissement SIG10 est généré par l'équipement terminal d'entrée T-PE1 et comporte un identifiant SAII1 du premier équipement terminal d'entrée T-PE1, un identifiant TAII2 de l'équipement terminal de sortie T-PE2, ainsi qu'un identifiant SAII3 du deuxième équipement terminal d'entrée T-PE3, un paramètre « backup » précisant que le deuxième circuit virtuel pw2 est un circuit virtuel de secours et un identifiant d'un équipement commutateur S-PE4 réalisant le basculement du premier circuit virtuel pw1 vers le deuxième circuit virtuel pw2 en cas de défaillance des liaisons L10 ou L11 constitutives du circuit virtuel pw1. Un tel message de demande d'établissement SIG10 est représenté à la figure 5A.

Un tel premier message de demande d'établissement SIG10 se distingue d'un message classique d'établissement d'un circuit virtuel car il comporte des données supplémentaires telles que l'identifiant SAII3 du deuxième équipement terminal d'entrée T-PE3 et le paramètre « backup » renseignant sur la nature du deuxième circuit virtuel pw2 à établir, l'identifiant de l'équipement commutateur S-PE4.

Le message de demande d'établissement SIG10 peut comprendre plusieurs identifiants d'équipements terminaux d'entrée à atteindre en cas de défaillance d'une liaison constitutive du premier circuit virtuel pw1. Un tel message comprend autant de paramètres « backup » qu'il y a d'équipements terminaux d'entrée à atteindre et donc qu'il y a de circuits virtuels de secours à établir.

Le message de demande d'établissement SIG10 peut également comprendre un champ supplémentaire comprenant une liste des équipements commutateurs entre lesquels les liaisons constitutives du premier circuit virtuel pw1 doivent être établies et une liste des équipements commutateurs entre lesquels les liaisons constitutives du deuxième circuit virtuel pw2 doivent être établies.

Lorsque le message SIG10 ne comprend pas de telles listes, l'identification des équipements commutateurs entre lesquels les liaisons constitutives du premier circuit virtuel pw1 et les liaisons constitutives du deuxième circuit virtuel pw2 doivent être établies sont déterminées au moyen d'une table de routage de l'équipement commutateur S-PE1 recevant le message SIG10.

Le couple {identifiant SAII1 du premier équipement terminal d'entrée T-PE1; identifiant TAII2 du premier équipement de sortie T-PE2} constitue une FEC (*Forwarding Equivalent Class,* ou en français classe équivalente de transfert. Ces informations sont nécessaires à l'établissement d'un circuit virtuel. Le couple constitué par l'identifiant SAII2 de l'équipement terminal de sortie T-PE2 et de l'identifiant TAII3 du deuxième équipement terminal d'entrée T-PE3 constitue également une FEC.

Lorsque le premier circuit virtuel est établi au travers d'un unique équipement commutateur, le message de demande d'établissement SIG10 ne comporte pas de liste des équipements commutateurs entre lesquels les liaisons constitutives du premier circuit virtuel pw1 et du deuxième circuit virtuel pw2 doivent être établies, ni d'identifiant de l'équipement commutateur.

Le message de demande d'établissement SIG10 comporte également une étiquette IbI10. Cette étiquette est utilisée par le premier équipement terminal d'entrée T-PE1 et le premier équipement commutateur S-PE1 lors de la diffusion des flux de données de l'équipement commutateur S-PE1 vers le premier équipement terminal d'entrée T-PE1. Cette étiquette est ajoutée par le premier équipement commutateur S-PE1 à chaque paquet de données destiné à être émis vers le premier équipement terminal d'entrée T-PE1.

Le message de demande d'établissement SIG10 ainsi généré est ensuite émis par le premier équipement terminal d'entrée T-PE1 à destination du premier équipement commutateur S-PE1.

A réception du premier message de demande d'établissement SIG10, l'équipement commutateur S-PE1 extrait l'identifiant du premier équipement terminal d'entrée T-PE1, l'identifiant de l'équipement terminal de sortie T-PE2 et le cas échéant la liste des équipements commutateurs entre lesquels les liaisons constitutives du premier circuit virtuel pw1 et la liste des équipements commutateurs entre lesquels les liaisons constitutives du deuxième circuit virtuel pw2 doivent être établies.

Fort de ces informations, le premier équipement commutateur S-PE1 complète une table de commutation. Cette table de commutation comporte pour une FEC donnée une information indiquant l'étiquette qui doit être insérée dans l'entête du message afin d'atteindre l'équipement émetteur du message, dans cet exemple le premier équipement terminal d'entrée, que celui-ci soit un autre équipement commutateur ou l'équipement terminal de sortie.

Une fois la table de commutation complétée, le premier équipement commutateur S-PE1 émet un deuxième message de demande d'établissement SIG11. Le message de demande d'établissement SIG11 est émis à destination du deuxième équipement commutateur S-PE4.

Le saut que doit effectuer le message de demande d'établissement SIG11 pour atteindre le deuxième équipement commutateur S-PE4 est déterminé au moyen des informations de routage contenues dans une table de routage de l'équipement commutateur S-PE1.

Le message SIG11 est identique au message SIG10, seule l'étiquette IbI11 à utiliser lors de la diffusion des données distingue les deux messages.

Les informations relatives au circuit virtuel de secours pw2, telles que l'identifiant de l'équipement commutateur devant réaliser le basculement du premier circuit virtuel pw1 vers le circuit virtuel de secours pw2 sont transmises d'un équipement commutateur à un autre jusqu'à ce que l'équipement commutateur devant réaliser le basculement soit atteint.

A réception de ce message de demande d'établissement SIG11, l'équipement commutateur S-PE4 extrait l'identifiant du premier équipement terminal d'entrée T-PE1, l'identifiant de l'équipement terminal de sortie T-PE2 et le cas échéant la liste des équipements commutateurs entre lesquels les liaisons constitutives du premier circuit virtuel pw1 doivent être établies ainsi qu'une liste explicite des équipements commutateurs entre lesquels les liaisons constitutives du circuit virtuel pw2 de secours doivent être établies. L'équipement commutateur S-PE4 étant l'équipement commutateur devant réaliser le basculement, sa table de commutation est également complétée avec le paramètre « backup » indiquant la nature du deuxième circuit virtuel pw2.

Une fois la table de commutation de l'équipement commutateur S-PE4 complétée, celui-ci émet deux messages d'établissement SIG12 et SIG13 à destination respectivement de l'équipement terminal de sortie T-PE2 et de l'équipement commutateur S-PE3.

Le message SIG12 comporte l'identifiant SAII1 du premier équipement terminal d'entrée T-PE1, l'identifiant TAII2 de l'équipement terminal de sortie T-PE2, l'identifiant de l'équipement commutateur devant réaliser le basculement du premier circuit virtuel pw1 vers le circuit virtuel de secours pw2, ainsi que l'étiquette Ibl12 à associer à la liaison L12 et utilisée lors de la diffusion des données. Un tel message est représenté à la figure 5B.

Le message SIG13, quant à lui, comporte l'identifiant SAII2 de l'équipement terminal de sortie T-PE2, l'identifiant TAII3 du deuxième équipement terminal d'entrée T-PE3, l'identifiant de l'équipement commutateur devant réaliser le basculement du premier circuit virtuel pw1 vers le circuit virtuel de secours pw2, ainsi que l'étiquette IbI13 associée à la liaison L13 à établir et utilisée lors de la diffusion des données. Un tel message peut comporter une liste explicite des équipements commutateurs entre lesquels les liaisons constitutives du deuxième circuit virtuel pw2 doivent être établies pour connecter l'équipement commutateur S-PE4 au deuxième équipement terminal d'entrée T-PE3. Dans un tel message de demande d'établissement, le champ identifiant de l'équipement d'entrée comporte l'identifiant de l'équipement terminal de sortie T-PE2 et le champ identifiant de l'équipement terminal de sortie comporte l'identifiant du deuxième équipement terminal d'entrée T-PE3. Ainsi, tout se passe comme si l'établissement de la liaison L13 constitutive du deuxième circuit virtuel pw2 était à l'initiative de l'équipement terminal de sortie T-PE2, qui est vu comme un équipement terminal d'entrée, le deuxième équipement terminal d'entrée T-PE3 étant vu comme un équipement terminal de sortie.

Une fois la table de commutation de l'équipement commutateur S-PE3 complétée, l'équipement commutateur S-PE3 émet un message de demande d'établissement SIG14 à destination de l'équipement commutateur S-PE2.

Le message SIG14 est identique au message SIG13, seule l'étiquette Ibl14 à utiliser lors de la diffusion des données distingue les deux messages.

A réception du message de demande d'établissement SIG14, l'équipement commutateur S-PE2 émet un message de demande d'établissement SIG15 à destination du deuxième équipement de terminaison d'entrée T-PE3.

Le message SIG15 est identique au message SIG14, seule l'étiquette Ibl15 à utiliser lors de la diffusion des données distingue les deux messages. Un tel message est représenté à la figure 5C.

A réception d'un paquet de données émis par le premier équipement terminal d'entrée T-PE1, le premier équipement commutateur S-PE1 utilise l'étiquette ajoutée au paquet par le premier équipement terminal T-PE1 pour déterminer, en fonction des informations contenues dans la table de commutation, vers quel équipement commutateur diriger le paquet de données. Avant l'émission du paquet de données à destination de l'équipement commutateur S-PE4, une nouvelle étiquette est ajoutée au paquet de données.

A réception du message d'établissement SIG12, l'équipement terminal de sortie T-PE2 émet, à destination du premier équipement terminal d'entrée T-PE1, un message d'établissement d'un circuit virtuel afin de pouvoir transmettre entre ces deux équipements terminaux des flux de données de manière bidirectionnelle. Ainsi, bien que T-PE2 soit un équipement terminal de sortie, il peut également se comporter comme un équipement terminal d'entrée.

Il en est de même pour le deuxième équipement terminal d'entrée T-PE3, qui à réception du message SIG15, émet, à destination de l'équipement terminal de sortie T-PE2, un message d'établissement d'un circuit virtuel afin de pouvoir transmettre entre ces deux équipements terminaux des flux de données de manière bidirectionnelle.

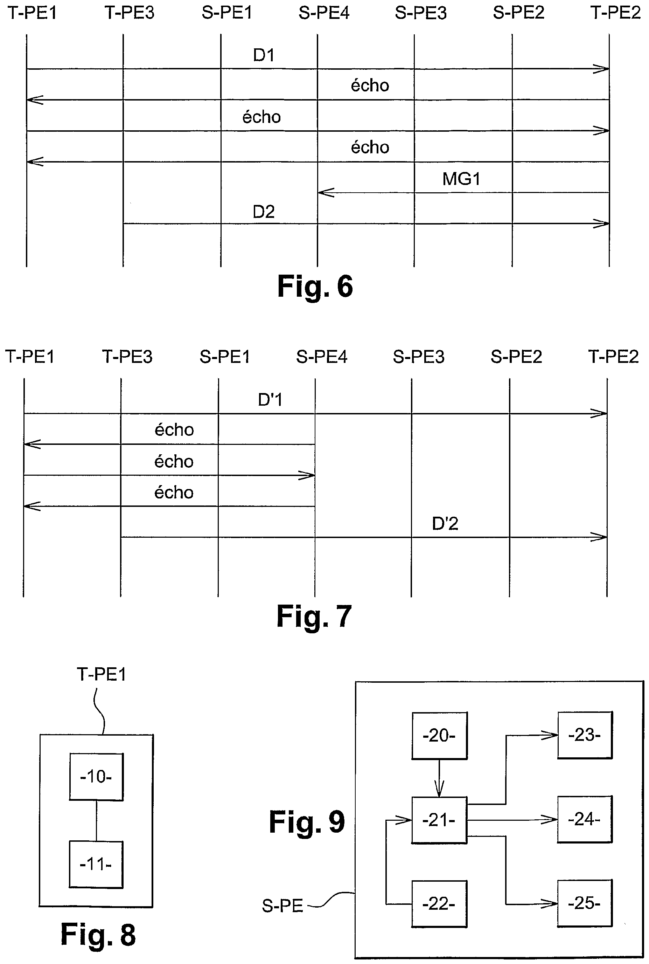

La figure 6 représente un diagramme temporel d'échange de messages entre le premier équipement terminal d'entrée T-PE1, les équipements commutateurs S-PE1, S-PE4, S-PE3 et S-PE2, l'équipement terminal de sortie T-PE2 et le deuxième équipement terminal d'entrée T-PE3 lors de la diffusion de flux de données.

Un flux de données D1 est émis par le premier équipement terminal d'entrée T-PE1 à destination de l'équipement terminal de sortie T-PE2. Ce flux de données est diffusé à travers le réseau PSN au moyen du premier circuit virtuel pw1.

Afin d'assurer la continuité du service, l'équipement terminal de sortie T-PE2 embarque une fonction de détection d'une défaillance du premier équipement d'entrée T-PE1 ou du premier lien, composé des liaisons L10 et L11, constitutif du premier circuit virtuel pw1. Afin de détecter une telle défaillance, l'équipement terminal de sortie T-PE2 échange régulièrement des messages « écho » avec le premier équipement terminal d'entrée T-PE1.

Lorsque l'équipement terminal de sortie ne reçoit pas de réponse à un message « écho », il en déduit que le premier équipement terminal d'entrée T-PE1, l'une des liaisons L10 ou L11 ou l'équipement commutateur S-PE1 est défaillant.

Lorsqu'une défaillance est détectée, l'équipement terminal de sortie T-PE2 émet alors un message MG1 de basculement à destination de l'équipement commutateur S-PE4. L'équipement terminal de sortie T-PE2 identifie l'équipement commutateur S-PE4 comme l'équipement destinataire du message MG1 au moyen de l'identifiant de l'équipement commutateur S-PE4 compris dans le message d'établissement SIG12.

A réception de ce message, l'équipement commutateur S-PE4 bascule les flux de données sur les liaisons L13, L14 et L15.

Parallèlement, l'équipement terminal de sortie T-PE2 demande à l'équipement CE1 le basculement du flux de données de l'équipement terminal d'entrée T-PE1 vers l'équipement terminal d'entrée T-PE3.

Dans une variante de réalisation, la défaillance est détectée par un équipement commutateur qui propage alors de proche en proche, un message de basculement. Une fois que ce message de basculement est reçu par l'équipement commutateur S-PE4, celui-ci bascule les flux de données sur le deuxième circuit virtuel.

Parallèlement, l'équipement commutateur de sortie S-PE4 informe de la défaillance le terminal de sortie T-PE2 et demande à l'équipement CE1 le basculement du flux de données de l'équipement terminal d'entrée T-PE1 vers l'équipement terminal d'entrée T-PE3.

Un flux de données D2 est alors émis par le deuxième équipement terminal d'entrée T-PE3 suite à la détection de la défaillance du premier équipement terminal d'entrée T-PE1 et diffusé par le deuxième circuit virtuel pw2.

Dans un autre mode de réalisation décrit en référence à la figure 7, l'équipement commutateur S-PE4 embarque une fonction de détection d'une défaillance du premier équipement terminal d'entrée T-PE1 ou du premier lien, composé des liaisons L10 et L11, constitutif du premier circuit virtuel pw1. Afin de détecter une telle défaillance, l'équipement commutateur S-PE4 échange par exemple régulièrement des messages « écho » avec le premier équipement terminal d'entrée T-PE1.

Lorsque l'équipement commutateur S-PE4 ne reçoit pas de réponse à son message « écho », il en déduit que le premier équipement terminal d'entrée T-PE1 est défaillant. Il bascule alors les flux de données provenant du premier équipement terminal d'entrée T-PE1 sur les liaisons L13, L14, L15 et en informe l'équipement terminal de sortie T-PE2 et l'équipement CE1.

Ainsi, un flux de données D'1 émis par le premier équipement terminal d'entrée T-PE1 suite à la détection de la défaillance de celui-ci ou du premier lien est alors émis par le deuxième équipement terminal d'entrée T-PE3 et diffusé par le deuxième circuit virtuel pw2.

La figure 8 représente un équipement terminal d'entrée T-PE1 apte à mettre en oeuvre le procédé d'établissement objet de l'invention.

L'équipement terminal d'entrée T-PE1 comprend des moyens d'émission 10 d'un message de demande d'établissement de deux circuits virtuels.

L'équipement terminal d'entrée T-PE1 comprend connecté en entrée des moyens d'émission 10, des moyens de génération 11 du message d'établissement de deux circuits virtuels. De tels moyens de génération 11 se distinguent des moyens de génération classiques d'un message d'établissement d'un circuit virtuel en ce qu'ils sont aptes à générer des messages de demande d'établissement comportant des données supplémentaires telles qu'un identifiant d'un deuxième équipement terminal d'entrée constituant une extrémité des deux circuits virtuels à établir et un paramètre « backup » renseignant sur la nature du deuxième circuit virtuel à établir, l'identifiant d'un équipement commutateur au travers duquel les deux circuits virtuels sont établis.

Ainsi, les moyens de génération 11 comprennent des moyens de traitement d'informations supplémentaires afin de générer le message de demande d'établissement telles que des informations relatives à la topologie du réseau de commutation de paquets auquel appartiennent les équipements de terminaison et l'équipement commutateur et notamment les différents sauts à effectuer pour atteindre les équipements concernés.

La figure 9 représente un équipement commutateur S-PE apte à mettre en oeuvre le procédé d'établissement objet de l'invention.

Cet équipement S-PE comprend une carte préprogrammée intégrée comportant une mémoire 20 formant moyen de stockage d'un programme d'ordinateur permettant de mettre en oeuvre les procédés d'établissement de deux circuits virtuels et de protection de flux de données au travers des circuits virtuels ainsi établis, objets de l'invention, et des moyens 21 permettant de commander l'exécution du programme d'ordinateur, ces moyens comprenant notamment un processeur.

L'équipement commutateur S-PE comprend également des moyens de réception 22 d'un message de demande d'établissement de deux circuits virtuels, et des moyens d'émission 23 de messages d'établissement de circuits virtuels de secours.

L'équipement commutateur comprend également des moyens de basculement 24 d'un flux de données transmis au travers du premier circuit virtuel sur un circuit virtuel de secours en cas de défaillance de liaisons constitutives du premier circuit virtuel.

Enfin dans un mode de réalisation particulier de l'équipement commutateur S-PE, celui-ci comprend également des moyens de détection 25 d'une défaillance de liaisons constitutives du premier circuit virtuel.

Enfin, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

## Revendications

1. Procédé d'établissement d'un circuit virtuel de secours destiné à être utilisé en cas de défaillance d'au moins un premier circuit virtuel établi entre un premier équipement terminal d'entrée et un équipement terminal de sortie, mis en oeuvre par un équipement commutateur, comprenant une étape de réception d'un premier message de demande d'établissement du premier circuit virtuel, le premier circuit virtuel à établir étant constitué d'un premier lien entre le premier équipement terminal d'entrée et l'équipement commutateur et d'un deuxième lien entre l'équipement commutateur et l'équipement terminal de sortie,
**caractérisé en ce que** le premier message de demande d'établissement comprend en outre :
- un identifiant dudit équipement commutateur, et
- une demande d'établissement du circuit virtuel de secours constitué du deuxième lien et d'un troisième lien à établir entre l'équipement commutateur et un deuxième équipement terminal d'entrée,
et **en ce que** le procédé comprend, à réception dudit premier message, une étape d'émission d'un deuxième message de demande d'établissement du troisième lien à destination du deuxième équipement terminal d'entrée,
et, un flux de données étant diffusé au travers du premier circuit virtuel, sur obtention par l'équipement commutateur d'une information de défaillance relative au premier lien, une étape de basculement du flux de données sur le troisième lien.

2. Equipement commutateur destiné à être connecté par un premier lien à un premier équipement terminal d'entrée et par un deuxième lien à un équipement terminal de sortie, lesdits premier et deuxième liens étant constitutifs d'un premier circuit virtuel à établir, l'équipement commutateur comprenant des moyens de réception d'un premier message de demande d'établissement du premier circuit virtuel,
**caractérisé en ce que** le premier message de demande d'établissement comprend un identifiant de l'équipement commutateur et une demande d'établissement d'un circuit virtuel de secours constitué du deuxième lien et d'un troisième lien à établir entre l'équipement commutateur et un deuxième équipement terminal d'entrée, l'équipement commutateur comprend des moyens d'émission d'un deuxième message de demande d'établissement du troisième lien à destination du deuxième équipement terminal d'entrée, et des moyens de basculement d'un flux de données du premier lien vers le troisième lien en cas de défaillance relative au premier lien.

3. Programme d'ordinateur, **caractérisé en ce qu'**il comprend des instructions de code de programme pour la mise en oeuvre des étapes du procédé selon la revendication 1 lorsque le programme est exécuté par un processeur.

## Patentansprüche

1. Verfahren zum Einrichten einer virtuellen Notschaltung, die dazu bestimmt ist, bei Ausfall mindestens einer ersten virtuellen Schaltung verwendet zu werden, die zwischen einer ersten Eingangsendeinrichtung und einer Ausgangsendeinrichtung eingerichtet ist, was durch eine Vermittlungseinrichtung realisiert worden ist, umfassend einen Schritt des Empfangens einer ersten Nachricht, die das Einrichten der ersten virtuellen Schaltung anfordert, wobei die erste einzurichtende virtuelle Schaltung aus einer ersten Verbindung zwischen der ersten Eingangsendeinrichtung und der Vermittlungseinrichtung und einer zweiten Verbindung zwischen der Vermittlungseinrichtung und der Ausgangsendeinrichtung besteht,
**dadurch gekennzeichnet, dass** die erste Einrichtungsanforderungsnachricht außerdem umfasst:
- eine Kennung der Vermittlungseinrichtung und
- eine Anforderung zum Einrichten der virtuellen Notschaltung, bestehend aus der zweiten Verbindung und einer dritten Verbindung, die zwischen der Vermittlungseinrichtung und einer zweiten Eingangsendeinrichtung einzurichten ist,
und dadurch, dass das Verfahren nach dem Empfang der ersten Nachricht einen Schritt des Sendens einer zweiten Nachricht, die das Einrichten der dritten Verbindung anfordert, an die zweite Eingangsendeinrichtung umfasst
und, da durch die erste virtuelle Schaltung ein Datenstrom übertragen wird, bei Erhalt, in der Vermittlungseinrichtung, einer Information über den Ausfall der ersten Verbindung einen Schritt des Umschaltens des Datenstroms auf die dritte Verbindung umfasst.

2. Vermittlungseinrichtung, die dazu bestimmt ist, über eine erste Verbindung an eine erste Eingangsendeinrichtung und über eine zweite Verbindung an eine Ausgangsendeinrichtung angeschlossen zu sein, wobei die erste und zweite Verbindung eine erste einzurichtende virtuelle Schaltung bilden, wobei die Vermittlungseinrichtung Mittel zum Empfangen einer ersten Nachricht, die das Einrichten der ersten virtuellen Schaltung anfordert, umfasst,
**dadurch gekennzeichnet, dass** die erste Einrichtungsanforderungsnachricht eine Kennung der Vermittlungseinrichtung und eine Anforderung zum Einrichten einer virtuellen Notschaltung, bestehend aus der zweiten Verbindung und einer dritten Verbindung, die zwischen der Vermittlungseinrichtung und einer zweiten Eingangsendeinrichtung einzurichten ist, umfasst, wobei die Vermittlungseinrichtung Mittel zum Senden einer zweiten Nachricht, die das Einrichten der dritten Verbindung anfordert, an die zweite Eingangsendeinrichtung und Mittel zum Umschalten eines Datenstroms von der ersten Verbindung zur dritten Verbindung im Falle eines Ausfalls der ersten Verbindung umfasst.

3. Computerprogramm, **dadurch gekennzeichnet, dass** es Programmcodeanweisungen zur Ausführung der Schritte des Verfahrens nach Anspruch 1, wenn das Programm von einem Prozessor abgearbeitet wird, umfasst.

## Claims

1. A method for establishing a backup pseudo-wire intended to be used in the case of failure of at least one first pseudo-wire established between a first input terminal equipment and an output terminal equipment, run by a switching equipment, comprising a step of receiving a first establishment request message of the first pseudo-wire, the first pseudo-wire to be established comprising a first link between the first input terminal equipment and the switching equipment and a second link between the switching equipment and the output terminal equipment,
**characterized in that** the first establishment-request message further comprises:
- an identifier of said switching equipment, and
- a request to establish the backup pseudo-wire comprising the second link and a third link to be established between the switching equipment and a second input terminal equipment,
and on receipt of said first message, a step of transmitting a second message requesting establishment of the third link to the second input terminal equipment,
and for a datastream being broadcasted over the first pseudo-wire, the method comprises, on receipt by the switching equipment of an item of information concerning failure relating to the first link, a step of switching the datastream to the third link.

2. A switching equipment intended to be connected via a first link to a first input terminal equipment and via a second link to an output terminal equipment, said first and second links comprising a first pseudo-wire to be established, the switching equipment comprising means for receiving a first establishment request message of the first pseudo-wire,
**characterized in that** the first establishment-request message comprises an identifier of said switching equipment and a request to establish a backup pseudo-wire comprising the second link and a third link to be established between the switching equipment and a second input terminal equipment, and said switching equipment comprising transmitting means of a second message requesting establishment of the third link to the second input terminal equipment, and means for switching a datastream from the first link to the third link in the event of failure relating to the first link.

3. A computer program, **characterized in that** the program comprises program-code instructions for performing steps of the method defined in claim 1 when the program is run by a processor.
